# EUROPEAN PATENT APPLICATION

(11) **EP 1 688 271 A1**
(43) Date of publication of application: **09.08.2006**
(21) Application number: 04797337.5
(22) Date of filing: 16.11.2004
(51) Int. Cl.: B44F 9/04, C04B 14/02

(54) **TRIDIMENSIONAL IMITATED STONE PATTERN PORCELAIN PLATE WITH THE MICROPOWDER PATTERNS AND THE MANUFACTURING METHOD AND THE FINAL PRODUCTS OF THIS PLATE**

(30) Priority: 17.11.2003 CN 200310113713
(71) Applicant: Yang, Dening, Shenzhen, Guangdong 518053 (CN)
(72) Inventor: Yang, Dening, Shenzhen, Guangdong 518053 (CN)
(74) Representative: Stuttard, Garry Philip
(86) International application number: PCT/CN2004/001305
(87) International publication number: WO 2005/047021

(57) **Abstract**

The present invention relates to a three-dimensional imitation stone pattern ceramic slab containing micropowder pattern, to method of producing thereof and to product using the same. The three-dimensional imitation stone pattern ceramic slab containing micropowder pattern includes two I-class and II-class pattern zones with clear and identifiable colors, wherein the number differential ratio of inward-recessed crescent-like polygon small patterns with micropowder characteristics and an area of 1cm²~150cm² in the pattern zone I-class and II-class among the said three-dimensional imitation stone pattern ceramic slab is 2:1-2.0. The thickness of the pattern zone I-class and II-class is 1mm~60mm. Meanwhile, the present invention provides a method of producing the slab and a product using the same. Three-dimensional imitation stone pattern ceramic slab containing micropowder pattern of the present invention is an further improvement to the imitation natural marble and granite decorative slab and has advantages such as better copy of structure, lower water absorption, lower color aberration, smooth finish, and being free of radio element contamination etc, compared with natural stone material. Practical machining operation in large quantity has cut down production cost and has created certain economic value of the industry.

## Description

### Technical field

The present invention relates to an imitation stone decorative slab used for decorative materials in ceramic field and architecture materials, to method of manufacturing the same and to product thereof. More particularly, relates to a three-dimensional (called as 3D hereunder) imitation stone pattern ceramic slab containing micropowder pattern used for decoration of permanent ground, walls and furniture in imitation stone pattern slab and its manufacturing method and product thereof.

### Background of the invention

With the development of technology and the growth in living standard, people hope to have floor and wall decoration material possessing appearance of natural stones, for example the granite-like and marble pattern, to achieve the top-grade effect.

The industry therefore has always been updating the structure of decorative slabs of natural stone imitation. The present inventor holds several invention patents of decorative slabs in the field of ceramic decorative slabs both at home (China) and abroad, for example in Europe, US, Japan. One technical patent of them relates to a process for producing stereo ceramic granite and marble, international publication No.WO97/36840, published on Oct. 9,1997, which discloses an imitation stone slab made up under the technology has clear-cut patterns on its surface. Besides, these patterns will not be transformed when undergoing surface treating. In that case, monolithic construction will be upgrade to optimize the steadiness in application. However, the imitation of stone material described here is far from satisfaction due to its still unnatural boundary transition of color patterns comparing with real stones.

To meet the demand of practicably, the inventor presented "Ceramic imitation of Granitic Slab and Its Manufacturing Method" (Issue No.WO99/28262, published on Jun.10, 1999). Although the patent technology can provide users a more practical ceramic granite-like slab and indeed advanced to the prior art, the final product yet has imperfect structure. The product made under this technology will only has surface patterns instead of dimensional patterns and consequently it won't be able to truthfully image the realistic feel of natural granite pattern inside out, especially in the lower part of the edge side. In the event of table-board decoration or the architectural ornament of the fringe exposed of wall or pillar, the edges of the product must be ground and finished. Without uniform grain patterns extending from inside to the outside, the imitation, comparing with natural stones, lacks of the sense of reality and completeness in practical application.

The decorative imitation slab of prior art with random distributed granular materials has disordered 3D patterns from the surface to the inside of the slab, and therefore these patterns are unable to form the same stable and uniform color patterns as natural stone. Consequently the imitation stone lacks the sense of reality.

Micropowder products in the prior art possess a characteristic of uneven size, better transition of pattern brim, natural petty patterns, better effect of special concave crescent-like pattern in natural marble and granite, which looks like appearance of rock flow, and possess an advantage of several petty color blocks of uneven size, but a total block of product, such as a big color zone, cannot clone regular patterns of natural granite and marble, for example Arabescato, Dark Green, Ajax, Baltic Brown, Giallo Fiorito, Giallo California and so on, which have a characteristic of regular pattern including 1-5 types big pattern zones. And therefore great limitation still exists.

To meet utility requirements, the present inventor presents another patent "Three-dimensional color pattern slabs formed by sintering ceramic powder" (issue No.CN1339363A, published on Mar. 3, 2002). The patent has disclosed the aforesaid 3D color pattern slab formed by sintering ceramic powder is a kind of ceramic product produced by using powder of colorful ceramic micropowder raw materials, pressing and sintering. The product contains clear-cut ceramic pattern blocks formed by different colors or one identical color but different from shade or diversified compound color. This pattern block is evenly distributed from the product surface layer to 70%-100% of bottom thickness, and can be made into 3D imitation stone material such as natural stone. In despite of great improvement in efficacy, regular distribution of powder materials in different color blocks and good 3D effect, only some of compound powder colors, pattern color containing big granules or salt-soluble color can be reflected, while lacking of abundant polygon, mild brim transition, fine petty pattern blocks in several concave crescent-like big pattern blocks such as produced in pattern blocks of natural marble and granite when natural lava flows, and further lacking of another smaller color pattern included in aforesaid fine petty patterns whose brim have a common boundary with two color blocks and can produce an effect of lava flow. Especially it is difficult to realize fine pattern of this effect with area 1cm²-2cm² in the massive production using the method of die and mould opening aforementioned by the present inventor.

To summarize the above mentioned, imitation natural stone decorative slabs in prior art are unable to form the same stable and uniform color patterns as natural stones and consequently the imitation lacks of the sense of reality.

To eliminate the defects, manufacturers involved have gone all out to seek for the solution but no suitable design has been developed for a long time. Consequently, an accomplished and applicable design will become an important issue to be solved.

In view of the aforesaid defects in imitation natural stone in the prior art, the inventor, making good use of his practical experience in the product design as well as manufacturing and professional knowledge, has been trying to create a new type of three-dimensional color pattern slabs containing micropowder powder pattern, its method and products, which can improve structure and utility of natural stone imitation now available in the market. Through unceasing research and repeated sample verification and improvement, especially solving complex problem such as fluidity, mixed ratio, water of micropowder massive production, technology of the equipment, gas exhaust, pattern selection, color match etc, the inventor eventually presented the invention with practical value.

### Disclosure of the invention

It is an object of this invention to overcome the defects of natural stone imitation now available and to provide a new type of three-dimensional (3D) imitation stone pattern ceramic slab containing micropowder pattern. The major technical issue is how to provide an imitation stone which has the same characteristic of micropowder in 1∼5 kinds of bigger pattern zones as natural stone and imitates patterns of stone in 3D space.

It is another object to provide a method manufacturing the three-dimensional imitation stone pattern ceramic slab containing micropowder pattern.

It is further another object to provide a product formed of three-dimensional imitation stone pattern ceramic slab containing micropowder pattern.

The purpose of the invention and major technical issue to be solved will be accomplished through following technical proposal. The invention brings up a three-dimensional imitation stone pattern ceramic slab containing micropowder pattern, including two I-class and II-class pattern zones with different colors or the identical color but different from shade clearly and identifiably, whose respective total areas are not less than 3%-50% of the product surface area; In one kind or 1-4 kinds of bigger pattern areas among these I-class and II-class pattern zones exist 3-1000 inward-recessed crescent-like polygon patterns formed of one color or 1-5 colors, with the characteristic of micropowder material and area of 1cm²~150cm². The distance of the most concave dot inward-recessed crescent-like part to the line linked by two most protrusive ends of the said crescent-like is 1.5mm~10mm; the surface layer of said slab contains 20~1000 small pattern color blocks with identical color to concave crescent-like pattern and the area of 3mm²~1000mm², wherein the number differential ratio of inward-recessed crescent-like polygon small patterns with more than one or 1-4 colors clearly and identifiably, which have micropowder characteristics and whose area are 1cm²~150cm² in the pattern zone I-class and II-class among the said slab is 2:1-2.0; and the thickness of the pattern zone I-class and II-class is 1mm~60mm.

The purpose of the invention and major technical issue to be solved will further be accomplished through following technical proposal.

The aforesaid 3D imitation stone pattern ceramic slab containing micropowder pattern, wherein said pattern zone I-class and II-class respectively include an inward-recessed crescent-like polygon small pattern with different colors which has micropowder characteristics and whose area is 1cm²~150cm².

The aforesaid 3D imitation stone pattern ceramic slab containing micropowder pattern, wherein said pattern zone I-class includes an inward-recessed crescent-like polygon small pattern with different color luster which has micropowder characteristics and whose area is 1cm²~150cm²; and said pattern zone II-class includes granules with a diameter of 2mm~20mm and different color from aforesaid inward-recessed crescent-like polygon small pattern of micropowder characteristics in pattern zone I-class, which account for 10%-70% of the surface area.

The aforesaid 3D imitation stone pattern ceramic slab containing micropowder pattern, wherein the number of pattern blocks in said pattern zone I-class and /or II-class is 50∼3000 and the ratio of length to width of the pattern is not more than 3.

The aforesaid 3D imitation stone pattern ceramic slab containing micropowder pattern, wherein the shape of said pattern zone I-class and /or II-class is inter-linked netlike, and 1~20 branch sections in this pattern zones extend to four side sections of 3D imitation stone pattern ceramic slab containing micropowder pattern.

The aforesaid 3D imitation stone pattern ceramic slab containing micropowder pattern, wherein the section plane of said 3D imitation stone pattern ceramic slab containing micropowder pattern includes 6∼20 intersect lines with different colors, which extend from the surface layer to the base of said ceramic slab. And the extended length is 80%~100% thickness of said ceramic slab.

The aforesaid 3D imitation stone pattern ceramic slab containing micropowder pattern, wherein 70%~100% area of the pattern zone I-class is pure white, pure black or blue-black pattern zone. Pattern zone II-class contains a grayish, powder blue, black or yellow zone, which includes 10∼3000 concave crescent-like small pattern blocks with a characteristic of micropowder.

The aforesaid 3D imitation stone pattern ceramic slab containing micropowder pattern, wherein the respective total area of pattern zone I-class and II-class are not less than 10%~90% surface area of said 3D ceramic slab.

The aforesaid 3D imitation stone pattern ceramic slab containing micropowder pattern, wherein the shape and site of more than 6 color pattern zones are overlapped on the surface of said 3D ceramic slab in said pattern zone I-class and II-class. And the overlapped error is not more than ±5cm on the four directions of surface pattern, such as top, bottom, left, right.

The aforesaid 3D imitation stone pattern ceramic slab containing micropowder pattern, wherein the fringes of polygon concave crescent-like small pattern with an characteristic of micropowder connect with at least 2 or 2-5 kind colors of powder materials or connect with small pattern blocks with an characteristic of micropowder.

The aforesaid 3D imitation stone pattern ceramic slab containing micropowder pattern, wherein said 3D ceramic slab contains one block or 1~1000 blocks of polygon small pattern with a characteristic of micropowder surrounding the other smaller pattern with different colors.

The aforesaid 3D imitation stone pattern ceramic slab containing micropowder pattern, wherein the distance of the most concave dot inside inward-recessed crescent-like part to the straight line linked by two most protrusive ends of the said crescent-like pattern which has micropowder characteristics is 3mm~10mm.

The aforesaid 3D imitation stone pattern ceramic slab containing micropowder pattern, wherein the pattern of ceramic slab with an characteristic of micropowder is formed by sintering the material including fine powder with an diameter of 0.1mm~0.3mm.

The aforesaid 3D imitation stone pattern ceramic slab containing micropowder pattern, wherein said pattern zone I-class and II-class include 1-5 kinds of colorful granular materials with a diameter of 1.5mm~20mm, which account for 2%-80% of surface area of said three-dimensional imitation stone pattern ceramic slab containing micropowder pattern.

The aforesaid 3D imitation stone pattern ceramic slab containing micropowder pattern, wherein said pattern zone I-class and II-class include granite granules with a diameter of 1mm~5mm.

The aforesaid 3D imitation stone pattern ceramic slab containing micropowder pattern, wherein the surface of said slab can be non-polished and/or polished.

The aforesaid 3D imitation stone pattern ceramic slab containing micropowder pattern, wherein on the surface of said slab, there is also stereo patterns formed by concave and convex anti-skid patterns in the depth of 0.1mm~5mm.The surface of the convex pattern can be polished or non-polished.

The aforesaid 3D imitation stone pattern ceramic slab containing micropowder pattern, wherein the overall geometric shapes of said slab include any form such as plane plate, cylinder, arc plate, partially cylinder, sphere, semi-sphere, conical semi-sphere, or combination of plane, conical semi-sphere or semi-sphere.

The aforesaid 3D imitation stone pattern ceramic slab containing micropowder pattern, wherein ceramic pattern zone of said ceramic slab includes scintillating silicate component pattern with component of vitrified phase over 70%, which can be colorless and transparent, translucent, or colored transparent such as black, green, white, purple, brown, blue, red, yellow, or opaque or high refractive.

The aforesaid 3D imitation stone pattern ceramic slab containing micropowder pattern, wherein said ceramic pattern zone of 3D imitation stone pattern ceramic slab contains micropowder pattern includes salt-soluble color pattern.

A method for the production of the inventive 3D imitation stone pattern ceramic slab containing micropowder pattern comprising the following steps:
(1) Mixing a kind or 1-10 kinds of different decorative color raw materials, which are of clear and identifiable colors and of 0.1mm~0.3mm diameter, with raw materials of different colors or the identical color but different from shade.
(2) Using different shape die templates corresponding to the number of big pattern color zone types. According to every different big pattern zone, the required type and number of pattern colors, sending the mixed materials to enter and fall into a prescribed pattern grid die or a planar carrier by turns or directly to enter base die template of stamping die, and keeping the planar shape of colorful pattern zone with a characteristic of micropowder through every big planar die pattern cavity entry machined according to the required characteristic of prescribed pattern shape.
(3) Again entering and falling into stamping die frame of the press and manufacturing brick ingots by stamping and forming of the ceramic press. Then obtaining three-dimensional imitation stone pattern ceramic slab by drying, firing and polishing.

Meanwhile, the inventive further provides a product using 3D imitation stone pattern ceramic slab containing micropowder pattern, whose upper layer is a ceramic material layer with thickness 1mm~15mm of said ceramic slab. The lower layer thereof is a common monochromatic ceramic material layer or that layer containing 1-5 kinds of colors with a 1mm~15mm thickness.

Above description is summary of the present invention. To understand technical means of the present invention more clearly and apply the present invention with reference to disclosure content of the specification, detailed description of the present invention with reference to the better examples and drawings is given hereunder.

Detailed description of specific structure and manufacturing method of present invention with reference to exemplary embodiments and drawings is given hereunder.

### Brief Description of the Drawings

Fig. 1 is a schematic perspective representation of a product of imitation Dark Green marble with 600mm×600mm in size according to example 1 and example 2 of the invention.
Fig.2 is a schematic representation of the boundary line of different color blocks and partial interface enlargement of micropowder pattern according to example 1 and example 2 of the invention.
Fig.3 is a schematic representation of the boundary line of different color blocks and section partial interface enlargement of product with an 10mm thickness of micropowder pattern according to example 1 and example 2 of the invention.
Fig.4 is a schematic representation of the top layer is the boundary line of different color blocks and section partial interface enlargement and the lower layer is normal ceramic powder according to example 2 of the invention.
Fig.5 is a schematic perspective representation of required steel mould (opening) according to example 1 and example 2 of the invention.
   1, Greenish black pattern block of ceramic material
   2, Color zone formed by sintering mixed green and gray ceramic powders
   3, Black color zone of ceramic material
   4, Concave crescent-like, polygon sintered pattern block of black powder
   5, Another small block of gray powder
   6, Black petty powder color block with an area of 3mm²~1000mm²
   7, Sintered zone of normal mixed black and green ceramic powder
   8, Natural transitional zone formed of two kinds of powder mixed naturally, sintered color zone 2 of green and gray ceramic powders and greenish black color zone 1
   10, Collapsible mould
   101, Mould (opening) passage of greenish black color powder
   102, Mould (opening) passage of green and gray ceramic powders, gray and black powders
   103, Mould (opening) passage of black color powder
   104, Plane planform representation of steel mould(opening)

### Description of the preferred embodiments

Combining the attached drawings and preferred embodiments of the invention, the following text has brought up detailed description on the fabrication method, structure, characteristics and virtues of three-dimensional (3D) imitation stone pattern ceramic slab containing micropowder pattern.

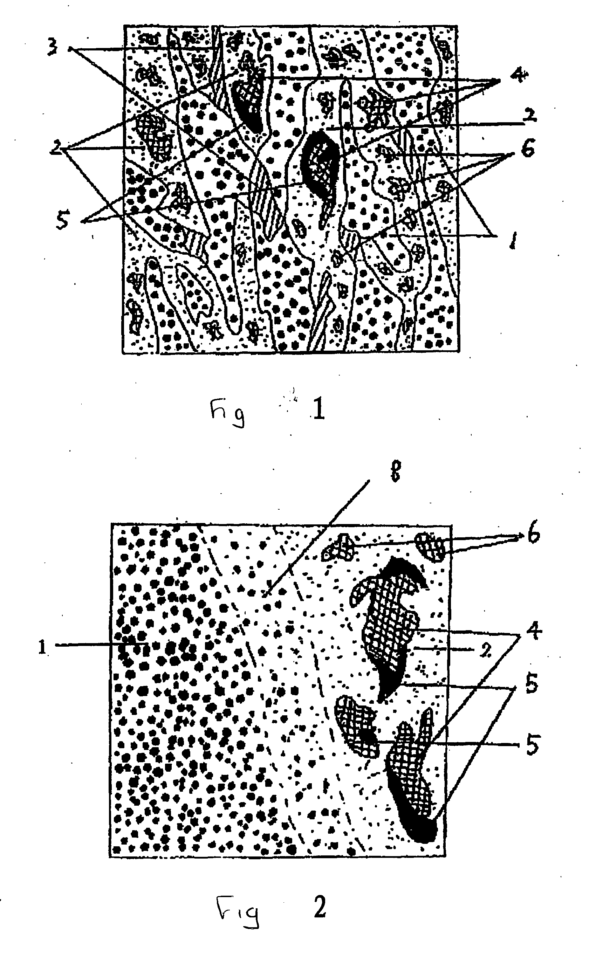

Refer to Fig.1, which is a schematic perspective representation of a product of imitation Dark Green marble with 600mm×600mm in size according to example 1 and example 2 of the invention. The pattern block 1 formed by big black spots is the greenish black section, while that block 2 formed by the small black spots is color zone formed by sintering mixed green and gray ceramic powders. The block 3 marked by sloping lines is black section of ceramic material. Big decussate pattern block 4 is concave crescent-like, polygon sintered pattern block of black powder. Black pattern block 5 is another small block of gray powder pattern zone and small decussate pattern block 6 is black petty powder color block with an area of 3mm²~1000mm². It is seen that boundary of pattern block 5 intersects with that of big crescent-like decussate pattern block 4 as well as pattern block 2 and forms natural flow-like fine patterns.

Now refer to Fig.2, which is a schematic representation of the boundary line of different color blocks and partial interface enlargement of micropowder pattern according to example 1 and example 2 of the invention. The pattern block 1 formed by big black spots is the greenish black section, while that block 2 formed by the small black spots is color zone formed by sintering mixed green and gray ceramic powders. The part between dotted lines shows that the greenish black block 1 naturally and reciprocally mix up with sintered color zone 2 of green and gray ceramic powders to form a transition zone 8 whose mixed proportion is 1:5~3:5. Big decussate pattern block 4 is concave crescent-like, polygon sintered pattern block of black powder. Black pattern block 5 is a small block of gray powder pattern zone and small decussate pattern block 6 is black petty powder color block with an area of 3mm²~1000mm². It is also seen that boundary of pattern block 5 intersects with that of big crescent-like decussate pattern block 4 as well as pattern block 2 and forms natural flow-like fine patterns. Small black pattern block 5 is gray powder pattern zone surrounded by black powder pattern zone.

Refer to Fig.3, which is a schematic representation of the boundary line of different color blocks and section partial interface enlargement of product with a 10mm thickness of micropowder pattern according to example 1 and example 2 of the invention. The pattern block 1 formed by big black spots is the greenish black section, while that block 2 formed by the small black spots is color zone formed by sintering mixed green and gray ceramic powders. The part between dotted lines shows that the greenish black block 1 naturally and reciprocally mix up with sintered color zone 2 of green and gray ceramic powders to form a transition zone 8 whose mixed proportion is 1:5~3:5. Big decussate pattern block 4 is concave crescent-like, polygon sintered pattern block of black powder. Black pattern block 5 is another small block of gray powder pattern zone and small decussate pattern block 6 is black petty powder color block with an area of 3mm²~1000mm².

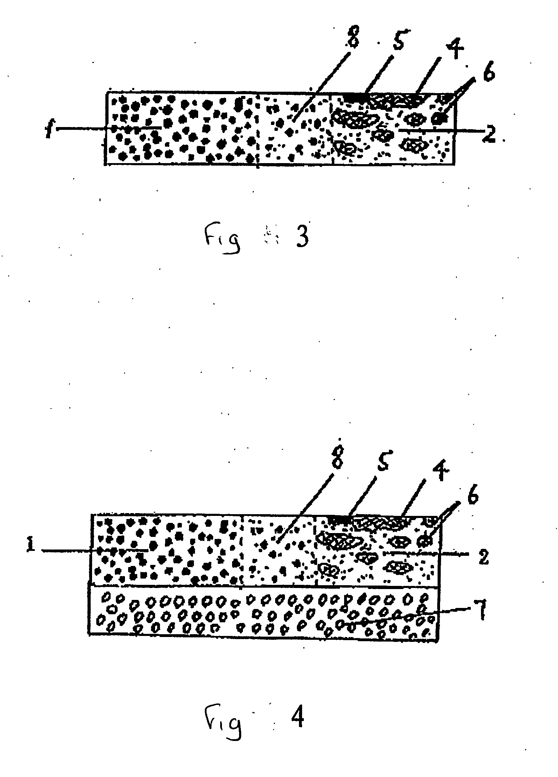

Refer to Fig.4, which is a schematic representation of the top layer is the boundary line of different color blocks and section partial interface enlargement and the lower layer is normal ceramic powder according to example 2 of the invention. The thickness of top layer is 5mm and that of the lower is also 5mm. The pattern block 1 formed by big black spots is the greenish black section, while that block 2 formed by the small black spots is color zone formed by sintering mixed green and gray ceramic powders. The part between dotted lines shows that the greenish black block 1 naturally and reciprocally mix up with sintered color zone 2 of green and gray ceramic powders to form a transition zone 8 whose mixed proportion is 10:50∼30:50. Big decussate pattern block 4 is concave crescent-like, polygon sintered pattern block of black powder. Black pattern block 5 is another small block of gray powder pattern zone and small decussate pattern block 6 is black petty powder color block with an area of 3mm²~1000mm². The pattern block formed by circles of lower layer shows sintered zone 7 of normal black and green mixed ceramic brick powder with a thickness of 5mm. The thickness of the lower part in product is 50% that of the top layer.

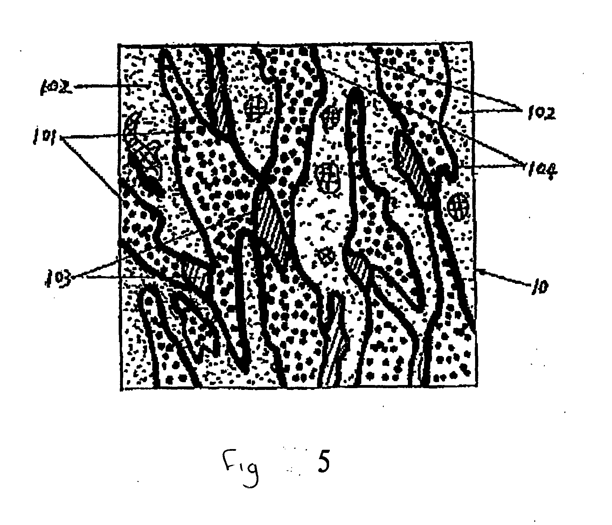

Refer to Fig.5, which is a schematic perspective representation of required steel mould (opening) 10 used for the method of manufacturing 3D imitation stone pattern ceramic slab containing micropowder pattern according to example 1 and example 2 of the invention. Big black spots are the mould opening 101 for greenish black powder passage, while small black spots is the mould opening 102 for green and gray ceramic powders or gray and black powders passage. The diagonal part represents the mould opening 103 for black powder passage and thick black lines show the head-down position of steel mould opening plane 104.

### Example 1

The method and fabrication process of 3D imitation stone pattern ceramic slab containing micropowder pattern under the invention are specified as follows:
(1) The first group: ceramic greenish black powder 1; the second group: 40% green powder, 40% gray powder respectively, addition of 10% black micropowder with a diameter of 0.1mm~0.3mm and 10% gray micropowder with a diameter of 0.1∼0.3mm; the third group: black powder. And separately fill these three kinds of powder material into three vessels;
(2) Put collapsible die assembly 10 under the vessels. The die assembly is equipped with 3 big pattern color block openings and is shaped into certain pattern. Wherein the first group falls into big pattern block of mould opening passage 101 for greenish black powder; the second group falls into big pattern block of mould opening passage 102 for mixed green and gray ceramic powders or gray and black micropowders; and the third group falls into big pattern block of mould opening passage 103 for black powder.
(3) According to Fig.5, one time each big pattern block and it takes three times to drop, infuse, fill multicolor raw materials of three blocks to respective die grid zone; and at the same time, drop, infuse, fill multicolor raw materials of three blocks to respective die grid zone by pipeline;
(4) Run and vibrate the steel die 10 on the plane at high speed to the front, the back, and the left and right in order to form natural mixture in the interface of different color blocks and to truthfully resemble the three dimensional structure of imitation Dark Green marble pattern. In this way, the different color powder materials and micropowder passes the opening of the collapsible die assembly 10 and fall into the stamping die frame of press. Due to bad fluidity and more water in small diameter powder, grume-like polygon block appears because of unevenly mixing, and therefore forms small pattern block in the big pattern block under the control of die grid zone, such as appearance of abundant polygon patterns produced in different pattern blocks of natural marble and granite when natural lava flows, further appearance of controlled mild brim transition, several concave crescent-like fine petty micropowder patterns and another smaller color pattern included in aforesaid fine petty patterns. Fringes of some fine petty patterns have a common boundary with two color blocks and can produce an effect of lava flow, which can be controlled to enter respectively design of big pattern zone, as is the inventive point of the present invention, and therefrom perfect three-dimensional pattern effect of many different stone materials can be imitated.
(5) Punch forming with 3000T press then drying at the temperature of 100°C~200°C in a 60-meter drying stove and firing into product at the temperature of 1200°C~1220°C in an 130-meter sintering stove.

Seen from Fig.1 in examples, in the big pattern zone 2, the concave depth of concave crescent-like black pattern block 4 with an characteristic of powder and an area of more than 1cm² is above 3mm. The number of black pattern block 4 in one product reach more than 3 and the number of small black pattern block 6 with an area of above 3 mm² is over 20. Compared with the other big pattern zone, no the same concave crescent-like black block 4 with concave depth over 3mm, an area over 1cm² and with an characteristic of powder in big pattern zone 2 exists in both black pattern big zone 3 and greenish black big zone 1. It is concluded that the number differential ratio of these black block with micropowder characteristic between big pattern zone 2 and the other pattern zone 1 and 3 is 2:0∼3:0. Concluded from example, the contrast between pattern zones of imitation stone forms therefrom. It is the reason that, in natural stone, the crescent-like polygon small pattern is just like lave flow and is different in any various big pattern zone from small pattern color luster with micropowder characteristic.Consequently small color blocks of natural flow in one color in respective big pattern zone can't appear, which is the most characteristic of pattern difference of imitation top-grade natural stone. If small patterns in big zones are in one of the same color or the same number ration, consequently, no natural combined effect of pretty big pattern difference for top-grade imitation stone appears. It is easy to understand for the skilled in the art, silicate brick color masses with different colors such as aforesaid red, yellow, white, blue, black, green, orange, purple and so on can be obtained through using or adding Fe₂O₃, Na₂O, V₂O₅, CoO, MnO₂, Cr₂O₃, CuO or the like.

### Example 2

The method and fabrication process of 3D imitation stone pattern ceramic slab containing micropowder pattern under the invention are specified as follows:
(1) Fill normal mixed green and black powder with 50% thickness into the stamping die frame of press.
(2) The first group: ceramic greenish black powder 1; the second group: 40% green powder, 40% gray powder respectively, addition of 10% black micropowder with a diameter of 0.1mm~0.3mm and 10% gray micropowder with a diameter of 0.1~0.3mm; the third group: black powder. And separately fill these three kinds of powder material into three vessels;
(3) Put collapsible die assembly 10 under the vessels. The die assembly is equipped with 3 big pattern color block openings and is shaped into certain pattern, wherein the first group falls into big pattern block of mould opening passage 101 for greenish black powder; the second group falls into big pattern block of mould opening passage 102 for mixed green and gray ceramic powders or gray and black micropowders; and the third group falls into big pattern block of mould opening passage 103 for black powder.
(4) According to Fig.5, one time each big pattern block and it takes three times to drop, infuse, fill multicolor raw materials of three blocks to respective die grid zone; and at the same time, drop, infuse, fill multicolor raw materials of three blocks to respective die grid zone by pipeline;
(5) Run and vibrate the steel die 10 on the plane at high speed to the front, the back, and the left and right in order to form natural mixture in the interface of different color blocks and to truthfully resemble the three dimensional structure of imitation Dark Green marble pattern. In this way, the different color powder materials and micropowder passes the opening of the collapsible die assembly 10 and fall into the stamping die frame of press. Due to bad fluidity and more water in small diameter powder, grume-like polygon block appears because of unevenly mixing, and therefore forms small pattern block in the big pattern block under the control of die grid zone, such as appearance of abundant polygon patterns produced in different pattern blocks of natural marble and granite when natural lava flows, further appearance of controlled mild brim transition, several concave crescent-like fine petty micropowder patterns and another smaller color pattern included in aforesaid fine petty patterns. Fringes of some fine petty patterns have a common boundary with two color blocks and can produce an effect of lava flow, which can be controlled to enter respectively design of big pattern zone, as is the inventive point of the present invention, and therefrom perfect three-dimensional pattern effect of many different stone materials can be imitated.
(6) Punch forming with 3000T press then drying at the temperature of 100°C~200°C in a 60-meter drying stove and firing into product at the temperature of 1200°C~1220°C in an 130-meter sintering stove.

Seen from Fig.1 in example 2, in the big pattern zone 2, the concave depth of concave crescent-like black pattern block 4 with an characteristic of powder and an area of more than 1cm² is above 3mm. The number of black pattern block 4 in one product reach more than 3 and the number of small black pattern block 6 with an area of above 3 mm² is over 20. Compared with the other big pattern zone, no the same concave crescent-like black block 4 with concave depth over 3mm, an area over 1cm² and with an characteristic of powder in big pattern zone 2 exists in both black pattern big zone 3 and greenish black big zone 1. It is concluded that the number differential ratio of these black block with micropowder characteristic between big pattern zone 2 and the other pattern zone 1 and 3 is 2:0∼3:0. Concluded from example, the contrast between pattern zones of imitation stone forms therefrom. It is the reason that, in natural stone, the crescent-like polygon small pattern is just like lave flow and is different in any various big pattern zone from small pattern color luster with micropowder characteristic.Consequently small color blocks of natural flow in one color in respective big pattern zone can't appear, which is the most characteristic of pattern difference of imitation top-grade natural stone. If small patterns in big zones are in one of the same color or the same number ration, consequently, no natural combined effect of pretty big pattern difference for top-grade imitation stone appears. It is easy to understand for the skilled in the art, silicate brick color masses with different colors such as aforesaid red, yellow, white, blue, black, green, orange, purple and so on can be obtained through using or adding Fe₂O₃, Na₂O, V₂O₅, CoO, MnO₂, Cr₂O₃, CuO or the like.

### Industrial Application

The invention possesses significant utility advantage and beneficial effect as compared with technology now available. To obtain above technical object, the main technical proposals are as follows:

A new slab product can be manufactured by pressing and firing ceramic colorful raw materials and micropowder. Local distributed density and site of colorful ceramic silicate raw material inside 3D space of product can be manufactured under the control according to the characteristic of natural stone, so as to obtain an efficacy of realistic copy of natural stone. At the same time, small micropowder characteristic patterns in different colorful big pattern zones of natural stone pattern can be cloned. And these small patterns include polygon, poly-prism of abundant shapes and different colors with mild brim transition, such as produced in different pattern blocks of natural marble and granite when natural lava flows and further contains several concave crescent-like or multi-crescent-like fine petty micropowder pattern. And sometimes another smaller color pattern is included in aforesaid fine petty patterns; sometimes fringes of some fine petty patterns interlock with two or more color blocks and produce an effect of natural lava flow. Especially effect of micropowder brim transition can be obtained by addition of 0.1mm~0.25mm micropowder during the working process of ceramic micropowder. At the same time, effect of imitation natural lava flow with a characteristic of ceramic material micropowder can also be obtained in virtue of effect of fluidity difference. Consequently classical natural stone can be realistically copied, for example marbles such as Arabescato, Ajax, Dark green, Rossa Verona, Perlino Rosato, Sally Rosa, Bianco Perlino, Rosa Norwegian and granites such as Giallo Fionito, Giallo Veneziano, Baltic Brown, Baltic Green Multicolor Red, Multicolor Green etc.

Conclude from the above, the present invention is of following advantages, compared with the prior art:
(1) Three-dimensional imitation stone pattern ceramic slab containing micropowder pattern of the present invention can manifest the better different natural effect of interlocked small patterns with several different colors formed by lava flow in natural stone. Both 3D well-regulated colorful normal pattern, for example bowlders and top-grade stones such as Arabescato, Snow Flower White, Dark green, Iundra Brown, Giallo California etc. and interlocked natural small patterns of different colors imitating lava flow in different big pattern zones can be copied by using ceramic materials. Menwhile, the product of the present invention has advantages such as better copy of structure, lower water absorption, lower color aberration, smooth finish, and being free of radio element contamination etc, compared with natural stone material and becomes a new design with better utility and improvement for pervasive application of the industry.
(2) The inventive method of manufacturing three-dimensional imitation stone pattern ceramic slab containing micropowder pattern, therefrom small pattern effect, as volcano lava flows, with different colors and a characteristic of micropowder in different zones can be produced by addition of micropowder in different colors into big pattern zones formed under the control of different big die patterns, especially with best effect in imitating top-grade marbles such as Dark green, Middle Flower Green, Rossa Verona.
(3) The inventive method of manufacturing three-dimensional imitation stone pattern ceramic slab containing micropowder pattern, therefrom small pattern effect, as volcano lava flows, with a characteristic of micropowder in I-class zones can be produced by addition of micropowder in single color into that zones formed under the control of different big die patterns. Abundant hiberarchy and better expressive effect in imitation granite block-like part can be formed by addition of granule powder in the other color with the diameter 2mm~20mm, accounting for 10%~70% of surface area of the product into II-class zones.
(4) The inventive method of manufacturing three-dimensional imitation stone pattern ceramic slab containing micropowder pattern, therefrom small pattern effect, as volcano lava flows, with a characteristic of micropowder in big pattern zones can be formed through addition of micropowder into big pattern zones formed under the control of different big die patterns. The length to width ratio of the big pattern zones regulated by the shapes of die opening is controlled in the range of over 3 times. At the same time, the patterns can take the shape of blocklike, oblong, ellipse etc, which can produce better effect for top-grade natural stone of dense patterns, for example Baltic-type granite such as Giallo Fiorito, Baltic Brown, Baltic Green etc.
(5) The inventive method of manufacturing three-dimensional imitation stone pattern ceramic slab containing micropowder pattern, therefrom concave crescent-like small pattern, as volcano lava flows, with a characteristic of micropowder can be formed by addition of micropowder in different colors into big pattern zones formed under the control of different big die patterns. The said big pattern zones can be pure white, pure black and blue-black big pattern zones with the area 70%~100% of the pattern zone I-class and part of netlike zones in pattern zone II-class including grayish, powder blue, black or yellow patterns. Best effect can be obtained in imitating top-grade marbles such as Arabescato, Ajax, Portoro, Palissandro Blue Giallo.
(6) The inventive three-dimensional imitation stone pattern ceramic slab containing micropowder pattern, wherein the shape of some pattern zones in two big pattern zones I-class and /or II-class is inter-linked netlike, where 1~20 netlike branch sections extend to four side sections of the product. The inventive of this structure of industrial product lies in imitating all the netlike marbles by the use of mould template and die technology combined with micropowder technology. The characteristic of micorpowder can appear in netlike zones, and also blocks surrounded by netlike zones as well as both of them at the same time. The clone level is very high in imitating netlike marbles such as Middle Flower Green, Emperador, Rosso lepanto.
(7) A three-dimensional imitation stone pattern ceramic slab containing micropowder pattern of the present invention is a further improvement to imitation natural marble and granite decorative slab. The slab is of many advantages, such as better copy of structure, lower water absorption, lower color aberration, smooth finish, and being free of radio element contamination, more utility in use etc, comparing with natural stone material. Practical machining operation in large quantity of the slab has cut down production cost and has created certain economic value of the industry.
(8) A three-dimensional imitation stone pattern ceramic slab containing micropowder pattern of the present invention can be cut from planar pattern in two big I-class and II-class pattern zones. 6∼20 intersect lines with different colors on the same section can be obtained, which extend from surface layer to bottom part of the product, and the extending length is 80%~100% thickness of said product. it is impossible to accomplish with all the micropowder products in the prior art, because micropowder patterns in the prior art exist on the surface of products without big regular pattern zones of different colors, while the depth of intersect lines in big pattern zone in 3D space of the present invention provides special 3D pattern expressive force of imitation natural marble in manufacturing furniture table-board slab of imitation marble and grinding, polishing the brim of products in the industrial application.

To summarize, during copying natural stone and cloning big regular pattern of different color zones, three-dimensional imitation stone pattern ceramic slab containing micropowder pattern, its manufacturing method and products of the present invention are more advantageous than imitation natural stone in the prior art in cloning big regulated pattern of different color zones and in further cloning natural effect with a characteristic of micropowder such as formed by the flow of medium and small lava in natural stones which exist in big different color zone patterns and big pattern zones take 3D space structure, which is inventive point of the present invention and is advance to many inventions of our own. Menwhile, the product of the present invention has advantages such as better copy of structure, lower water absorption, lower color aberration, smooth finish, and being free of radio element contamination etc, compared with natural stone material and becomes a new design with better utility and advance for pervasive application of the industry.

The above described are only the preferred embodiments of the present invention which does not in any way limit the present invention. The skilled in prior art can obtain three-dimensional imitation stone pattern ceramic slab containing micropowder pattern, its manufacturing method and products thereof according to the different required patterns and properties with reference to the disclosure of the invention. It should be appreciated that any modification or changes may be made t according to the preferred embodiments of the present invention without departing from the scope of technical solutions describe herein.

## Claims

1. , A three-dimensional imitation stone pattern ceramic slab containing micropowder pattern, including two I-class and II-class pattern zones with different colors or the identical color but different from shade clearly and identifiably, whose respective total areas are not less than 3%-50% of the product surface area; In one kind or 1-4 kinds of bigger pattern areas among these I-class and II-class pattern zones exist 3-1000 inward-recessed crescent-like polygon patterns formed of one color or 1-5 colors, with the characteristic of micropowder material and area of 1cm²~150cm². The distance of the most concave dot inward-recessed crescent-like part to the line linked by two most protrusive ends of the said crescent-like is 1.5mm~10mm; the surface layer of said slab contains 20~1000 small pattern color blocks with identical color to concave crescent-like pattern and the area of 3mm²~1000mm², wherein the number differential ratio of inward-recessed crescent-like polygon small patterns with more than one or 1-4 colors clearly and identifiably, which have micropowder characteristics and whose area are 1cm²~150cm² in the pattern zone I-class and II-class among the said slab is 2:1-2.0; and the thickness of the pattern zone I-class and II-class is 1mm~60mm.

2. , The three-dimensional imitation stone pattern ceramic slab containing micropowder pattern according to claim 1, wherein said pattern zone I-class and II-class respectively include an inward-recessed crescent-like polygon small pattern with different color luster which has micropowder characteristics and whose area is 1cm²~150cm².

3. The three-dimensional imitation stone pattern ceramic slab containing micropowder pattern according to claim 1, wherein said pattern zone I-class includes an inward-recessed crescent-like polygon small pattern with different color luster which has micropowder characteristics and whose area is 1cm²~150cm²; and said pattern zone II-class includes granules with a diameter of 2mm~20mm and different color from aforesaid inward-recessed crescent-like polygon small pattern of micropowder characteristics in pattern zone I-class, which account for 10%-70% of the surface area.

4. The three-dimensional imitation stone pattern ceramic slab containing micropowder pattern, according to claim 1, wherein the number of pattern blocks in said pattern zone I-class and /or II-class is 50∼3000 and the ratio of length to width of the pattern is not more than 3. The three-dimensional imitation stone pattern ceramic slab containing micropowder pattern according to claim 1,

5. The three-dimensional imitation stone pattern ceramic slab containing micropowder pattern, according to claim 1, wherein the shape of said pattern zone I-class and /or II-class is inter-linked netlike, and 1~20 branch sections in these pattern zones extend to four side sections of 3D imitation stone pattern ceramic slab containing micropowder pattern.

6. The three-dimensional imitation stone pattern ceramic slab containing micropowder pattern, according to claim 1, wherein the section plane of said 3D imitation stone pattern ceramic slab containing micropowder pattern includes 6∼20 intersect lines with different colors, which extend from the surface layer to the base of said ceramic slab. And the extended length is 80%~100% thickness of said ceramic slab.

7. The three-dimensional imitation stone pattern ceramic slab containing micropowder pattern, according to claim 1, wherein 70%~100% area of the said pattern zone I-class is pure white, pure black or blue-black pattern zone. Pattern zone II-class contains a grayish, powder blue, black or yellow zone, which includes 10~3000 concave crescent-like small pattern blocks with a characteristic of micropowder.

8. The three-dimensional imitation stone pattern ceramic slab containing micropowder pattern according to claim 1, wherein the respective total area of pattern zone I-class and II-class are not less than 10%~90% surface area of said 3D ceramic slab.

9. The three-dimensional imitation stone pattern ceramic slab containing micropowder pattern according to claim 1, wherein the shape and site of more than 6 color pattern zones are overlapped on the surface of said 3D ceramic slab in said pattern zone I-class and II-class. And the overlapped error is not more than ±5cm on the four directions of surface pattern, such as top, bottom, left, right.

10. The three-dimensional imitation stone pattern ceramic slab containing micropowder pattern according to claim 1, wherein the fringes of polygon concave crescent-like small pattern with an characteristic of micropowder connect with at least 2 or 2-5 kind colors of powder materials zone or connect with small pattern blocks with an characteristic of micropowder.

11. The three-dimensional imitation stone pattern ceramic slab containing micropowder pattern according to claim 1, wherein said 3D ceramic slab contains one block or 1∼1000 blocks of polygon small pattern with a characteristic of micropowder surrounding the other smaller pattern with different colors.

12. The three-dimensional imitation stone pattern ceramic slab containing micropowder pattern according to claim 1, wherein the distance of the most concave dot inside inward-recessed crescent-like part to the straight line linked by two most protrusive ends of said crescent-like pattern which has micropowder characteristics is 3mm~10mm.

13. The three-dimensional imitation stone pattern ceramic slab containing micropowder pattern according to claim 1, wherein the pattern of ceramic slab with an characteristic of micropowder is formed by sintering the material including fine powder with an diameter of 0.1mm~0.3mm.

14. The three-dimensional imitation stone pattern ceramic slab containing micropowder pattern according to claim 1, wherein said pattern zone I-class and II-class include 1-5 kinds of colorful granular materials with a diameter of 1.5mm~20mm, which account for 2%-80% of surface area of said three-dimensional imitation stone pattern ceramic slab containing micropowder pattern.

15. The three-dimensional imitation stone pattern ceramic slab containing micropowder pattern according to claim 1, wherein pattern zone I-class and II-class include granite granules with a diameter of 1mm~5mm.

16. The three-dimensional imitation stone pattern ceramic slab containing micropowder pattern according to claim 1, wherein the surface of said slab can be non-polished and/or polished.

17. The three-dimensional imitation stone pattern ceramic slab containing micropowder pattern according to claim 1, wherein on the surface of said slab, there is also stereo patterns formed by concave and convex anti-skid patterns in the depth of 0.1mm~5mm. The surface of the convex pattern can be polished or non-polished.

18. The three-dimensional imitation stone pattern ceramic slab containing micropowder pattern according to claim 1, wherein the overall geometric shapes of said slab include any form such as plane plate, cylinder, arc plate, partially cylinder, sphere, semi-sphere, conical semi-sphere, or combination of plane, conical semi-sphere or semi-sphere.

19. The three-dimensional imitation stone pattern ceramic slab containing micropowder pattern according to claim 1, wherein ceramic pattern zone of said three-dimensional imitation stone pattern ceramic slab containing micropowder pattern includes scintillating silicate component pattern with component of vitrified phase over 70%, which can be colorless and transparent, translucent, or colored transparent such as black, green, white, purple, brown, blue, red, yellow, or opaque or high refractive.

20. The three-dimensional imitation stone pattern ceramic slab containing micropowder pattern according to claim 1, wherein ceramic pattern zone of said three-dimensional imitation stone pattern ceramic slab containing micropowder pattern includes salt-soluble color pattern.

21. A method of manufacturing three-dimensional imitation stone pattern ceramic slab containing micropowder pattern, wherein the method comprising the following steps:
(1) Mixing a kind or 1-10 kinds of different decorative color, colorful, bad-fluidity raw micropowder materials, which are of clear and identifiable colors and of 0.1mm~0.3mm diameter, with better fluidity normal ceramic brick powder materials of different colors or the identical color but different from shade.
(2) Using different shape die templates corresponding to the number of big pattern color zone types. According to every different big pattern zone, the required type and number of pattern colors, sending the mixed materials to enter and fall into a prescribed pattern grid die or a planar carrier by turns and keeping the planar shape of colorful pattern zone with a characteristic of micropowder through every big planar die pattern cavity entry with the same shape as that of the required pattern.
(3) Then again entering and falling into stamping die frame of the press and manufacturing brick ingots by stamping and forming of the ceramic press. Then obtaining three-dimensional imitation stone pattern ceramic slab by drying, firing and polishing.

22. A product using three-dimensional imitation stone pattern ceramic slab containing micropowder pattern, wherein the upper layer thereof is a ceramic material layer with thickness 1mm~15mm of three-dimensional imitation stone pattern ceramic slab containing micropowder pattern, the lower layer thereof is a common monochromatic ceramic material layer or that layer containing 1-5 kinds of colors with a 1mm~15mm thickness.
